# EUROPEAN PATENT APPLICATION

(11) **EP 3 413 257 A1**
(43) Date of publication of application: **12.12.2018**
(21) Application number: 18176089.3
(22) Date of filing: 05.06.2018
(51) Int. Cl.: G06Q 30/02, G06Q 20/20

(54) **SALES TRANSACTION SUPPORT SYSTEM**

(30) Priority: 08.06.2017 JP 2017113668
(71) Applicant: Toshiba TEC Kabushiki Kaisha, Tokyo 141-8562 (JP)
(72) Inventor: ARAI, Yasuhiro, Shinagawa-ku,, Tokyo 141-8562 (JP); HASEGAWA, Keiichi, Shinagawa-ku,, Tokyo 141-8562 (JP); NAMBU, Kazuya, Shinagawa-ku,, Tokyo 141-8562 (JP)
(74) Representative: Takeuchi, Maya

(57) **Abstract**

A sales transaction support system according to an embodiment includes a server that stores records including a member code and a corresponding notification destination, and reward data indicating a reward content and a reward condition. A register device generates transaction data, and receives an input of a user code via the input device. If the user code corresponds to one of the member codes, the member code is added to the transaction data. The server receives the transaction data including the member code from the register device, and determines whether the reward condition is satisfied based on the transaction data. If the reward condition is satisfied based on the transaction data, the server transmits a notification of the reward content to the notification destination corresponding to the member code included in the received transaction data.

## Description

### FIELD

The present invention relates to the field of an electric receipt technology in general, and embodiments described herein relate in particular to a sales support transaction system.

### BACKGROUND

In retail transactions, for example, granting rewards such as issuing coupons to customers who perform the transactions have widely been performed.

In electronic receipt services, some rewards may be granted to only certain customers out of a plurality of customers. That is, the rewards are granted to the customers in consideration of achievements or the like with respect to previous purchases.

However, granting rewards in such electronic receipt services is performed at timings irrespective of the timing of individual transactions for an individual customer. For this reason, it is difficult for customers receiving the rewards to feel a sense that the reward was actually granted in certain transactions. There is a concern of an effect of an improvement in motivation of customers being insufficient from the granting of the rewards.

To solve such problem, there is provided a sales transaction support system comprising: a server including: a first communication interface, a storage device storing: a plurality of member records each including a member code and a corresponding notification destination, and reward data indicating a reward content and a reward condition, and a server processor; and a register device including: a second communication interface, an input device, and a register processor configured by a register program to: perform a registration operation and generate corresponding transaction data; receive an input of a user code via the input device, determine whether the user code corresponds to one of the member codes, if the user code corresponds to one of the member codes, add the member code to the transaction data and transmit the transaction data including the member code to the server via the second communication interface, wherein the server processor is configured by a server program to: receive the transaction data including the member code from the register device via the first communication interface, determine whether the reward condition is satisfied based on the transaction data, and if the reward condition is satisfied based on the transaction data, transmit, via the first communication interface, a notification of the reward content to the notification destination corresponding to the member code included in the received transaction data.

Preferably, the notification is transmitted as a push notification.

Preferably still, the notification is transmitted as an email.

Preferably yet, the notification includes at least one of a date of the registration operation and a store at which the registration operation was performed.

Suitably, the plurality of member records each include a flag indicating whether a second member code is stored in association with the corresponding member code, the register processor is further configured by the register program to: if the user code does not correspond to one of the member codes, determine whether the user code corresponds to one of the second member codes, if the user code corresponds to one of the second member codes, add the second member code to the transaction data and transmit the transaction data including the second member code to the server via the second communication interface.

Suitably still, the register processor is further configured by the register program to: if the user code does not correspond to one of the member codes or one of the second member codes, receive an input via the input device indicating whether to add the user to one of the member records, if the input indicates to add the user to one of the member records, receive an input of a second user code corresponding to one of the member codes, and add the member code and the second user code to the transaction data to be transmitted to the server.

Suitably yet, if the input indicates to add the user to one of the member records, the register processor is further configured by the register program to add cooperation data to the transaction data to be transmitted to the server, the cooperation data instructing the server to store the second user code as the second member code in association with the member code included with the transaction data.

Typically, when the transaction data including the cooperation data is received via the first communication interface, the server processor is further configured by the server program to control the storage device to store the second user code as the second member code in association with the member code included with the transaction data and to set the corresponding cooperation flag.

Typically still, the server processor is further configured by the server program to determine whether the reward condition is satisfied based further on previous transaction data stored in association with the member code included with the transaction data.

Typically yet, the reward content can be used for a discount purchase at a store corresponding to a store at which the registration operation was performed.

The invention also relates to a method of operating a sales transaction support system that includes a server and a register device, the method comprising: storing, in the server, a plurality of member records each including a member code and a corresponding notification destination, and reward data indicating a reward content and a reward condition; performing, in the register device, a registration operation and generate corresponding transaction data; receiving an input of a user code; determining whether the user code corresponds to one of the member codes; if the user code corresponds to one of the member codes, adding the member code to the transaction data; communicating the transaction data including the member code from the register device to the server; determining whether the reward condition is satisfied based on the transaction data; and if the reward condition is satisfied based on the transaction data, transmitting, from the server to the notification destination corresponding to the member code included in the received transaction data, a notification of the reward content.

Preferably, in the method, the notification is transmitted as a push notification.

Preferably still, in the method, the notification is transmitted as an email.

Preferably yet, in the method, the notification includes at least one of a date of the registration operation and a store at which the registration operation was performed.

Suitably, in the method, the plurality of member records each include a flag indicating whether a second member code is stored in association with the corresponding member code, the method further comprising: if the user code does not correspond to one of the member codes, determining whether the user code corresponds to one of the second member codes; if the user code corresponds to one of the second member codes, adding the second member code to the transaction data; and transmitting the transaction data including the second member code to the server via the second communication interface.

Suitably still, the method further comprises: if the user code does not correspond to one of the member codes or one of the second member codes, receiving an input indicating whether to add the user to one of the member records; if the input indicates to add the user to one of the member records, receiving an input of a second user code corresponding to one of the member codes; and adding the member code and the second user code to the transaction data to be communicated from the register device to the server.

Suitably yet, the method further comprises: if the input indicates to add the user to one of the member records, adding cooperation data to the transaction data to be communicated from the register device to the server, the cooperation data instructing the server to store the second user code as the second member code in association with the member code included with the transaction data.

Typically, the method further comprises: when the server receives the transaction data including the cooperation data is received via the first communication interface, storing the second user code as the second member code in association with the member code included with the transaction data and setting the corresponding cooperation flag.

Typically still, in the method, whether the reward condition is satisfied is based further on previous transaction data stored in association with the member code included with the transaction data.

Typically yet, in the method, the reward content can be used for a discount purchase at a store corresponding to a store at which the registration operation was performed.

The invention also concerns a non-transitory computer readable medium storing a program causing a computer to execute the method described above.

The invention further relates to a server for a sales transaction support system comprising a register device, the server comprising: a first communication interface, a storage device storing: a plurality of member records each including a member code and a corresponding notification destination, and reward data indicating a reward content and a reward condition, and a server processor; wherein the server processor is configured by a server program to: receive transaction data including the member code from the register device via the first communication interface, determine whether the reward condition is satisfied based on the transaction data, and if the reward condition is satisfied based on the transaction data, transmit, via the first communication interface, a notification of the reward content to the notification destination corresponding to the member code included in the received transaction data.

Preferably, the notification is transmitted as a push notification.

Preferably still, the notification is transmitted as an email.

Preferably yet, the server processor is further configured by the server program to determine whether the reward condition is satisfied based further on previous transaction data stored in association with the member code included with the transaction data.

Suitably, the notification includes at least one of a date of a registration operation performed by the register device and a store at which the registration operation was performed.

Suitably still, the reward content can be used for a discount purchase at the store.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating an example configuration of an electronic receipt system including an electronic receipt server and a point-of-sale (POS) terminal according to an embodiment.
FIG. 2 is a diagram illustrating an example data record included in a member database.
FIG. 3 is a diagram illustrating an example data record included in a reward database.
FIG. 4 is a flowchart illustrating an example sequence of operations performed by the POS terminal.
FIG. 5 is a flowchart illustrating an example sequence of operations performed by the electronic receipt server. 1.

### DETAILED DESCRIPTION

Embodiments provide a sales transaction support system capable of providing a user with timely rewards so that the user can recognize that the rewards are actually granted in certain transactions in which an electronic receipt service is used.

A sales transaction support system according to an embodiment includes a server with a storage device that stores: a plurality of member records each including a member code and a corresponding notification destination, and reward data indicating a reward content and a reward condition. The system further includes a register device with an input device, and a register processor configured by a register program. The register processor performs a registration operation and generates corresponding transaction data, and receives an input of a user code via the input device. The register processor determines whether the user code corresponds to one of the member codes, and if the user code corresponds to one of the member codes, adds the member code to the transaction data and transmit the transaction data including the member code to the server. The server also includes a server processor configured by a server program. The server processor receives the transaction data including the member code from the register device, and determines whether the reward condition is satisfied based on the transaction data. If the reward condition is satisfied based on the transaction data, the server processor transmits a notification of the reward content to the notification destination corresponding to the member code included in the received transaction data.

Hereinafter, an example of an embodiment will be described with reference to the drawings.

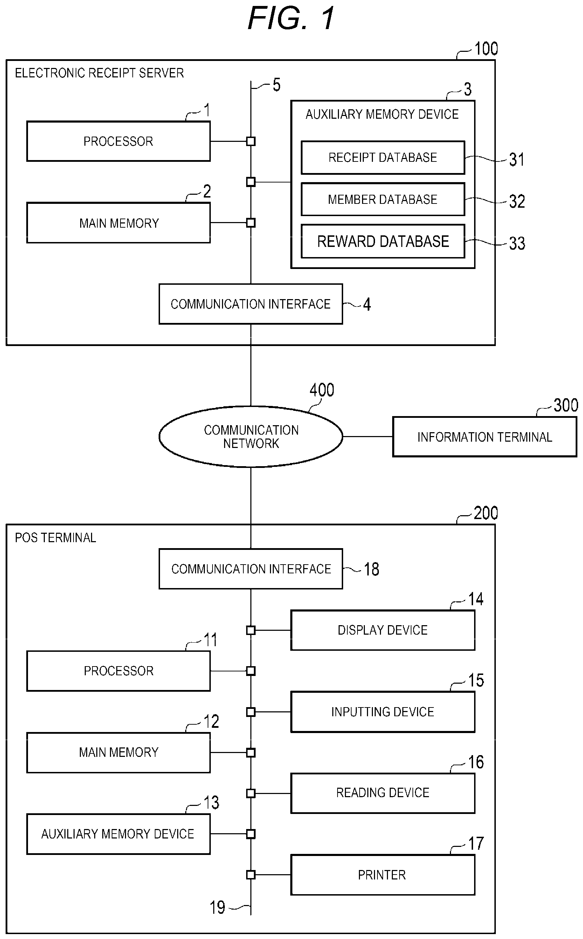

FIG. 1 is a block diagram illustrating an example configuration of an electronic receipt system including an electronic receipt server and a point-of-sale (POS) terminal according to an embodiment.

In the electronic receipt system, the electronic receipt server 100 can communicate with a POS terminal 200 and an information terminal 300 via a communication network 400. The electronic receipt system typically includes a plurality of POS terminals 200 and a plurality of information terminals 300, but only one POS terminal 200 and only one information terminal 300 are illustrated in FIG. 1.

The electronic receipt server 100 receives and stores content of transactions registered with the POS terminal 200 and performs information processing allowing the content of the transactions to be confirmed with the information terminal 300, thereby providing an electronic receipt service.

The POS terminal 200 registers content of a transaction such as sales of commodities, supply of food and drink, or supply of services and performs a payment process. The POS terminal 200 notifies the electronic receipt server 100 of the content of the transaction when a customer who performs the transaction is a member of the electronic receipt service. That is, the POS terminal 200 is an example of a transaction registration apparatus.

The information terminal 300 is an information processing apparatus that is be used by a member of the electronic receipt service, and accesses the electronic receipt server 100 via the communication network 400. The information terminal 300 functions as a client device. The information terminal 300 may be connected to the communication network 400 through one of wired communication and wireless communication. Any of various known apparatuses such as a smartphone, a tablet terminal, a portable telephone apparatus, and a personal computer can be used as the information terminal 300. Accordingly, detailed description of the information terminal 300 will be omitted.

As the communication network 400, the Internet, a virtual private network (VPN), a local area network (LAN), a public communication network, and a mobile communication network can be used singly or appropriately in combination. The communication network 400 is typically a combination of a mobile communication network and the Internet.

The electronic receipt server 100 includes a processor 1, a main memory 2, an auxiliary memory device 3, a communication interface 4, and a transmission path 5. The processor 1, the main memory 2, the auxiliary memory device 3, and the communication interface 4 are connected by the transmission path 5.

In the electronic receipt server 100, the processor 1, the main memory 2, and the auxiliary memory device 3 are connected through the transmission path 5 to function as a computer that performs information processing to control the electronic receipt server 100.

The processor 1 functions as the central processor of the computer. The processor 1 controls each component such that various functions can be realized in the electronic receipt server 100 in accordance with an operating system and an application program.

The main memory 2 functions as a main memory of the computer. The main memory 2 includes a nonvolatile memory region and a volatile memory region. The main memory 2 stores the operating system and the application program in the nonvolatile memory region. The main memory 2 stores data necessary for the processor 1 to perform a process of controlling each component in the nonvolatile or volatile memory region in some cases. In the main memory 2, the volatile memory region is used a work area in which data can be appropriately rewritten by the processor 1.

The auxiliary memory device 3 functions as an auxiliary memory of the computer. As the auxiliary memory device 3, for example, an electric erasable programmable read-only memory (EEPROM), a hard disc drive (HDD), a solid state drive (SSD), or any other various known memory devices can be used. The auxiliary memory device 3 stores data used for the processor 1 to perform various processes and data generated through the processes by the processor 1. The auxiliary memory device 3 stores application programs in some cases.

The communication interface 4 performs data communication via the communication network 400. As the communication interface 4, for example, a known interface performing known processes to perform data communication via the Internet can be used.

The transmission path 5 includes an address bus, a data bus, and a control signal line and transmits data or control signals transmitted and received between the connected units.

The auxiliary memory device 3 stores a receipt database 31, a member database 32, and a reward database 33. The receipt database 31 stores various kinds of information to supply the electronic receipt service to members of the electronic receipt service. The member database 32 stores various kinds of information to manage the members. The reward database 33 stores various kinds of information to manage rewards to be granted to the members.

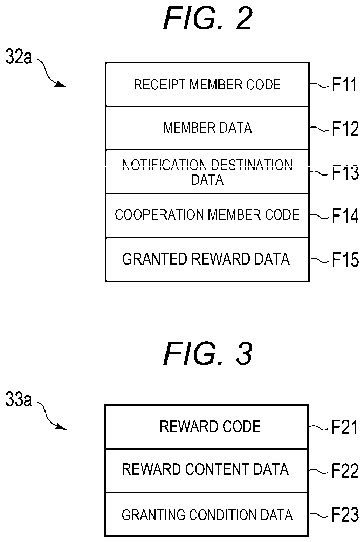

FIG. 2 is a diagram illustrating an example data record included in the member database 32.

The member database 32 includes a plurality of member records 32a illustrated in FIG. 2, for example. The member database 32 may be subject to a known normalization processing as may be appropriate.

The member records 32a correspond to a plurality of members. The member record 32a includes fields F11, F12, F13, F14, and F15. Data of the field F11 indicates a receipt member code for identifying a corresponding member. The receipt member code is equivalent to a second member code. Data of the field F12 indicates member data such as the name, address, and the like of a corresponding member. Data of the field F13 indicates notification destination data representing a destination to which a notification regarding a granted reward is sent. Data of the field F13 is, for example, a terminal code for identifying the information terminal 300 used by a corresponding member and an email address used for the corresponding user to receive an electronic mail. Data of the field F14 indicates a cooperation member code in which cooperation is set in the receipt member code of the field F11 and which different from the receipt member code. The cooperation member code is equivalent to a first member code. Data of the field F15 is granted reward data including a reward code for identifying at least a reward granted to a corresponding user. The granted reward data can include any item of information regarding a reward such, for example, as a valid period.

FIG. 3 is a diagram illustrating an example data record included in the reward database 33.

The reward database 33 includes a plurality of the reward record 33a illustrated in FIG. 3. The reward database 33 may be subject to a known normalization processing as may be appropriate.

The reward record 33a corresponds to each of a plurality of rewards which are granted to users of the electronic receipt service. The reward record 33a includes fields F21, F22, and F23. Data of the field F21 indicates a reward record for identifying a corresponding reward. Data of the field F22 indicates reward content data related to content of a corresponding reward. The content indicated by the reward content data is, for example, "favorite commodity 10% discount" or "draft beer 100 yens discount". Data of the field F23 indicates granting condition data regarding conditions that the corresponding reward is granted. A granting condition indicated by the granting condition data is, for example, "account amount is 2000 yens or more" or "purchase commodities include three or more beers".

The electronic receipt server 100 can be realized by an application program describing information processing to be described below on the main memory 2 or the auxiliary memory device 3, for example, using a general-purpose computer apparatus for a server as hardware. The application program may be stored in the main memory 2 or the auxiliary memory device 3 at the time of transfer of the electronic receipt server 100 and may be transferred separately from the foregoing general-purpose computer apparatus. In the latter case, the application program is recorded on a removable recording medium such as a magnetic disk, a magneto-optical disc, or an optical disc, or a semiconductor memory or may be transferred via a network.

The POS terminal 200 includes a processor 11, a main memory 12, an auxiliary memory device 13, a display device 14, an inputting device 15, a reading device 16, a printer 17, a communication interface 18, and a transmission path 19.

In the POS terminal 200, the processor 11, the main memory 12, and the auxiliary memory device 13 are connected through the transmission path 19 to function as a computer that performs information processing to control the POS terminal 200.

The processor 11 functions as the central processor of the computer. The processor 11 controls each component such that various functions can be realized in the POS terminal 200 in accordance with an operating system and an application program.

The main memory 12 functions as a main memory of the computer. The main memory 12 includes a nonvolatile memory region and a volatile memory region. The main memory 12 stores the operating system and the application program in the nonvolatile memory region. The main memory 12 stores data necessary for the processor 11 to perform a process of controlling each component in the nonvolatile or volatile memory region in some cases. In the main memory 12, the volatile memory region is used a work area in which data can be appropriately rewritten by the processor 11.

The auxiliary memory device 13 functions as an auxiliary memory of the computer. As the auxiliary memory device 13, for example, an EEPROM, a HDD, an SSD, or any other various known memory devices can be used. The auxiliary memory device 13 stores data used for the processor 11 to perform various processes and data generated through the processes by the processor 11. The auxiliary memory device 13 stores application programs in some cases.

The display device 14 displays various screens to notify an operator of various kinds of information. For example, a known device such as a liquid crystal device can be applied as the display device 14.

The inputting device 15 inputs various instructions from the operator. A known device such as a touch sensor or a keyboard, alone or in combination, can be applied as the inputting device 15.

The reading device 16 reads data from a medium. As the reading device 16, a known device such as a barcode scanner or a card reader can be applied singly or in combination.

The printer 17 prints a receipt image on a receipt sheet and issues a receipt.

The communication interface 18 performs data communication via the communication network 400. As the communication interface 18, for example, a known interface for performing data communication via the Internet can be used.

The transmission path 19 includes an address bus, a data bus, and a control signal line and transmits data or control signals transmitted and received between the connected units.

The POS terminal 200 stores the application program describing information processing to be described in the main memory 12 or the auxiliary memory device 13. The application program may be stored in the main memory 12 or the auxiliary memory device 13 at the time of transfer of hardware of the POS terminal 200 or may be transferred separately from the hardware. In the latter case, the application program is recorded on a removable recording medium such as a magnetic disk, a magneto-optical disc, or an optical disc, or a semiconductor memory or may be transferred via a network.

Next, an operation of the electronic receipt system with the foregoing configuration will be described. Content of various processes to be described below is exemplary and various processes capable of obtaining the same result can be appropriately used.

When the POS terminal 200 is in an operation state in which registration and payment of a transaction are performed, the processor 11 performs the operations described below based on the application program stored in the main memory 12 or the auxiliary memory device 13.

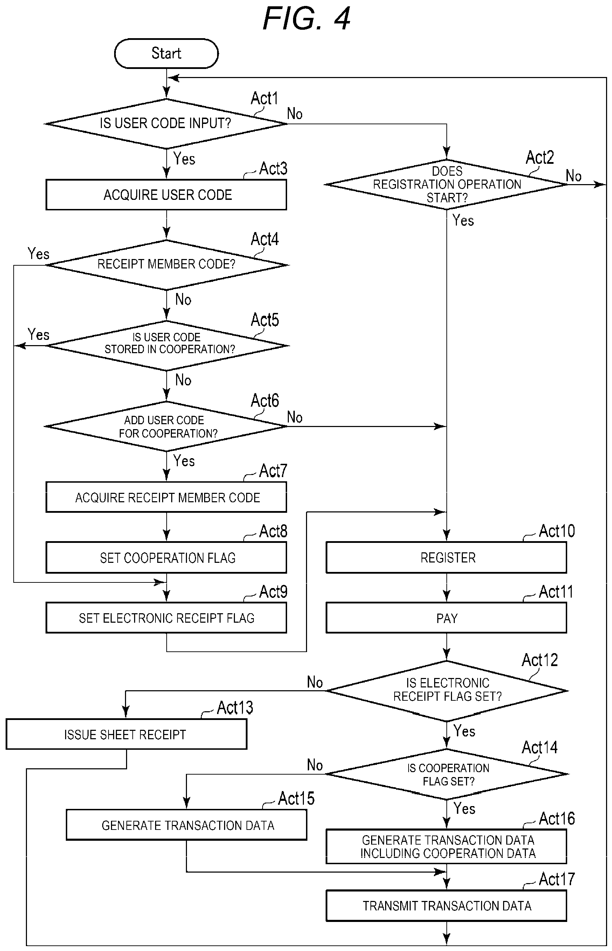

FIG. 4 is a flowchart illustrating and example sequence of operations performed by the processor 11.

In Act1, the processor 11 confirms whether a user code is input. Then, when no user code is input, the processor 11 determines No and the process proceeds to Act2.

In Act2, the processor 11 confirms whether an operation of registering transaction content starts. Then, when the operation does not start, the processor 11 determines No and the process returns to Act1.

Thus, in Act1 and Act2, the processor 11 receives an input of the user code or waits for starting an operation for registration.

Then, the operator of the POS terminal 200 inputs the user code for identifying the user to the POS terminal 200 when the electronic receipt service is applied to a transaction to be registered from now. Specifically, for example, the operator operates the inputting device 15 to input the user code, causes the reading device 16 to read a member card screen displayed on the information terminal 300 or the like, or causes the reading device 16 to read a medium such as a card on which the user code is recorded. Then, when the user code is input in this way, the processor 11 determines Yes in Act1 and the process proceeds to Act3. The operator is an employee of a facility or the like in which the transaction is performed in some cases and is a user in some cases.

In the electronic receipt system, not only a member code corresponding to the current user who performs the transaction and is also a member of the electronic receipt service (hereinafter "receipt member code"), but also another member code with which cooperation with the receipt member code is set may be used as the user code. That is, the plurality of POS terminals 200 included in the electronic receipt system can be distributed and disposed in a plurality of facilities and can be operated by other service providers in the plurality of facilities. An electronic receipt service provider managing the electronic receipt server 100 grants the receipt member code to a user who performs registration for the electronic receipt service. On the other hand, the plurality of service providers managing the facilities in which the POS terminals 200 are installed may introduce member services different from the electronic receipt service and therefore grant different member codes to users in some cases.

Conventionally, when a user who uses both the member service and the electronic receipt service, it is inconvenient to use both the member service and the electronic receipt service in that the user must input each of the member code for the member service and the receipt member code for the electronic receipt service . Accordingly, in the electronic receipt system, when the member code set for cooperation, that is, the cooperation member code, is input as the user code, the electronic receipt service can be applied.

In Act3, the processor 11 acquires the user code input in this way from the inputting device 15 or the reading device 16.

In Act4, the processor 11 confirms whether the acquired user code is the receipt member code. Then, when the user code is not the receipt member code, the processor 11 determines No and the process proceeds to Act5. The processor 11 may perform the confirmation in accordance with any scheme. For example, it is assumed to a query is sent to the electronic receipt server 100.

In Act5, the processor 11 confirms whether the user code is stored in cooperation with the receipt member code. Specifically, the processor 11 queries to the electronic receipt server 100 whether the user code is included as the cooperation member code in the member database 32. Then, when the user code is not stored in cooperation with the receipt member code, the processor 11 determines No and the process proceeds to Act6.

In Act6, the processor 11 confirms whether the user code is added in cooperation with the receipt member code. Specifically, the processor 11 displays a screen for querying whether the user code is to be added in cooperation with the receipt member code on the display device 14 and confirms whether the user code is to be added in cooperation with the receipt member code in response to an instruction based on the screen from the operator to the inputting device 15. Then, when the cooperation is instructed, the processor 11 determines Yes and the process proceeds to Act7.

When the operator instructs the cooperation, a receipt member number for causing the user code to cooperate with the receipt member code is input to the inputting device 15 or is allowed to be read by the reading device 16.

In Act7, the processor 11 acquires the receipt member code from the inputting device 15 or the reading device 16.

In Act8, the processor 11 sets a cooperation flag to indicate a set state. The cooperation flag is, for example, 1-bit data in the main memory 12 or the auxiliary memory device 13 and indicates that the cooperation is set in the set state.

When the processor 11 causes the cooperation flag to enter the set state, the process proceeds to Act9. When the user code is the receipt member code or the cooperation setting of the user code with the receipt member code is completed, the processor 11 determines Yes in Act4 or Act5, Act6 to Act8 are passed, and the process proceeds to Act9.

In Act9, the processor 11 causes an electronic receipt flag to enter the set state. The electronic receipt flag is, for example, 1-bit data in the main memory 12 or the auxiliary memory device 13. When the electronic receipt flag is in the set state, it is indicated that the electronic receipt service is applied.

When the processor 11 causes the electronic receipt flag to be set, the process proceeds to Act10. When a registration operation starts without inputting the user code, the processor 11 determines Yes in Act2. Then, in this case, the processor 11 passes Act3 to Act9 and the process proceeds to Act10. When the operator designates the user code as not cooperating with the electronic receipt code, the processor 11 determines No in Act6. Then, in this case, the processor 11 passes Act7 to Act9 and the process proceeds to Act10. That is, when the registration operation starts without inputting the user code and the operator designates the user code as not being added in cooperation with the electronic receipt code, the processor 11 does not set either the cooperation flag or the electronic receipt flag. Although not illustrated, the processor 11 initializes both the cooperation flag and the electronic receipt flag to a reset state before transition to the waiting state of Act1 and Act2.

In Act10, the processor 11 registers the transaction content in response to an operation by the operator.

In Act11, the processor 11 pays a price for the registered transaction. In the embodiment, when the payment is completed, the transaction is assumed to be completed.

In Act12, the processor 11 confirms whether the electronic receipt flag is in the set state. Then, when the electronic receipt flag is not in the set state, the processor 11 determines No and the process proceeds to Act13.

In Act13, the processor 11 issues a paper receipt by operating the printer 17. Then, the processor 11 subsequently returns to the waiting state of Act1 and Act2.

Conversely, when the electronic receipt flag is in the set state, the processor 11 determines Yes in Act12 and the process proceeds to Act14.

In Act14, the processor 11 confirms whether the cooperation flag is in the set state. Then, when the cooperation flag is not in the set state, the processor 11 determines No and the process proceeds to Act15.

In Act15, the processor 11 generates transaction data without including cooperation data to be described below. The transaction data includes information indicating content of a transaction, a payment result, and the like. For example, when the POS terminal 200 is installed in a commodity store, information included in the transaction data includes a user code, a commodity code, a commodity name, a unit price, a quantity, a sum of money tendered, a payment price, and change amount returned.

When the cooperation flag is in the set state, the processor 11 determines Yes in Act14 and the process proceeds to Act16.

In Act16, the processor 11 generates transaction data including the cooperation data. The cooperation data is data for requesting the electronic receipt server 100 to store the user code acquired in Act3 in cooperation with the receipt member code acquired in Act7.

Thus, when the processor 11 performs the information processing based on the application program, the computer using the processor 11 functions as a generating unit for generating transaction data through the process of Act15 or Act16.

When the processor 11 generates the transaction data in Act15 or Act16, the process proceeds to Act17 in either case.

In Act17, the processor 11 transmits the transaction data generated in Act15 or Act16 from the communication interface 18 via the communication network 400 to the electronic receipt server 100. Then, the processor 11 subsequently returns to the waiting state of Act1 and Act2. Thus, the communication interface 18 functions as a transmitting unit that transmits the transaction data to the electronic receipt server 100.

When the transaction data transmitted from the POS terminal 200 arrives at the electronic receipt server 100 through the communication network 400, the transaction data is received by the communication interface 4. Thus, the communication interface 4 functions as a receiving unit that receives the transaction data.

The processor 1 starts information processing to be described below starts in response to reception of the transaction data by the communication interface 4.

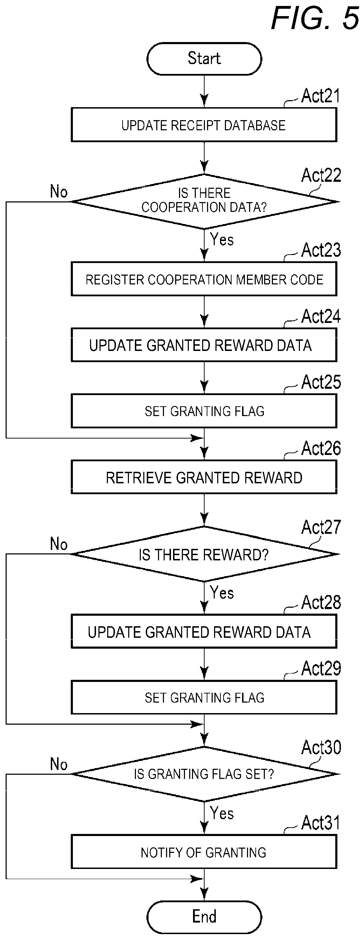

FIG. 5 is a flowchart illustrating information processing by the processor 1 in FIG. 1.

In Act21, the processor 1 updates the receipt database 31 to include the content of the transaction, the payment result, or the like indicated by the received transaction data. Specifically, the processor 1 extracts data to be stored in the receipt database 31 among various kinds of data included in the transaction data and updates the receipt database 31 so that the data is included in association with the user code included in the transaction data. The receipt database 31 stores various kinds of data in association with the receipt member code. Therefore, when the user code is the receipt member code, the processor 1 adds various kinds of data in relation to the user code to the receipt database 31 substantially as received. When the user code is not the receipt member code and the cooperation data is not included in the transaction data, the processor 1 adds various kinds of data in relation to the receipt member code for which the cooperation of the user code is set to the receipt database 31. When the user code is not the receipt member code and the cooperation data is included in the transaction data, the processor 1 adds various kinds of data in relation to the receipt member code indicated by the cooperation data to the receipt database 31. Thus, when the processor 1 performs the information processing based on the application program, a computer using the processor 1 as a central processor functions as the storing unit.

In Act22, the processor 1 confirms whether the cooperation data is included in the received transaction data. Then, when the cooperation data is included in the received transaction data, the processor 1 determines Yes and the process proceeds to Act23.

In Act23, the processor 1 registers the cooperation member code for a user identified with the receipt member code requested to cooperate with the user code in the cooperation data. Specifically, the processor 1 selects the member record 32a for which the data of the field F11 matches the receipt member code requested to cooperate with the user code in the cooperation data from the member records 32a. Then, the processor 1 writes the user code included in the received transaction data in the field F14 of the corresponding member record 32a. At this time, when the field F14 already includes another data, the processor 1 may overwrite the existing data or keep the existing data and add the user code.

In Act24, the processor 1 updates the granted reward data of the member record 32a selected in Act23. Specifically, the processor 1 updates the data of the field F15 of the member record 32a selected in Act23 so that it is indicated that there is an authority to receive a predetermined reward in the cooperation registration. When a recipient of a reward is defined as a different person from a member in the member database 32 or the reward database 33, the processor 1 may grant the reward to the defined recipient. Thus, when the processor 1 performs the information processing based on the application program, a computer using the processor 1 as a central processor functions as the granting unit.

In Act25, the processor 1 causes the granting flag to be set. The granting flag is, for example, 1-bit data in the main memory 2 or the auxiliary memory device 3. When the granting flag is in the set state, the granting flag indicates that a new reward is awarded. Although not illustrated, the processor 1 initializes the granting flag to the reset state when the process illustrated in Fig. 5 starts.

When the granting flag is in the set state, the processor 1 causes the process to proceed to Act26. When the cooperation data is not included in the currently received transaction data, the processor 1 determines No in Act22, Act23 to Act25 are passed, and the process proceeds to Act26.

In Act26, the processor 1 retrieves a reward to be granted based on the currently received transaction data from the reward database 33. The reward retrieved here by the processor 1 may be, of course, a reward granted based on a different condition from the reward granted in Act24. Specifically, the processor 1 confirms whether the currently received transaction matches the granting condition indicated by the granting condition data of the field F23 of each reward record 33a. The processor 1 may realize the confirmation in addition to information regarding previous transactions included in the receipt database 31 depending on the granting condition. Then, when there is the reward record 33a in which the matching granting condition is indicated by the granting condition data of the field F23, the processor 1 sets the reward code indicated in the field F21 of the reward record 33a as the reward code of a granting target reward.

In Act27, the processor 1 confirms whether there is a reward to be granted. Then, when at least one reward code is set as the reward code of the granting target, the processor 1 determines Yes and the process proceeds to Act28.

In Act28, the processor 1 updates the granted reward data of the member record 32a. Specifically, the processor 1 selects the member record 32a in which the data of the field F11 is the receipt member code for identifying a member from the member records 32a. That is, when the user code is the receipt member code, the processor 1 selects the member record 32a in which the data of the field F11 matches the user code. When the user code is the cooperation member code, the processor 1 selects the member record 32a in which the data of the field F14 matches the user code. Then, the processor 1 updates the data of the field F15 of the member record 32a selected in this way so that the data indicates there is an authority to receive a reward determined to be granted. As in the case of Act24, the processor 1 may grant the reward to a different recipient from the user. Thus, when the processor 1 performs the information processing based on the application program, a computer using the processor 1 as a central processor functions as the granting unit.

In Act29, the processor 1 causes the granting flag to enter the set state.

Then, the processor 1 subsequently causes the process to proceed to Act30. Conversely, when there is no reward to be granted, the processor 1 determines No in Act27, Act28 and Act29 are passed, and the process proceeds to Act30.

In Act30, the processor 1 confirms whether the granting flag is in the set state. When the granting flag is in the set state, the processor 1 determines Yes and causes the process to proceed to Act31.

In Act31, the processor 1 notifies the information terminal 300 that a reward is newly granted. Specifically, when the data of the field F13 of the member record 32a selected in Act23 or Act28 indicates the terminal code, the processor 1 transmits a notification to the information terminal 300 identified with the terminal code. Specifically, when the data of the field F13 of the member record 32a selected in Act23 indicates an email address, the processor 1 transmits a notification email destined for the email address. For example, the push notification and the notification email are used to notify a user that content of the reward granted in at least one of Act24 and Act28 is indicated by, for example, a text message and image data. The push notification and the notification email preferably indicate at least partial information of transaction information such as a transaction date and a store name so that the user can recognize which transaction a reward is granted from. Any notification destination may be determined by the user, but is determined in principle so that the user can receive of the push notification and the notification email. Thus, when the processor 1 performs the information processing based on the application program, a computer using the processor 1 as a central processor functions as the notifying unit.

Then, when the notification ends, the processor 1 ends the information processing illustrated in FIG. 5. When the granting flag is in the reset state, the processor 1 determines No in Act30, Act31 is passed, and the information processing illustrated in FIG. 5 directly ends.

As described above, when the electronic receipt server 100 receives the transaction information regarding a new transaction, the electronic receipt server 100 confirms whether a reward is granted to a user with regard to the transaction. When the reward is granted, the electronic receipt server 100 notifies the user that the reward is granted by push notification or a notification email. Accordingly, when the transaction is performed using the electronic receipt service, the user is notified that the reward is granted, and thus it is possible to strongly impress the user with a sense that the reward was granted in connection with the transaction.

When a transaction is completed, the POS terminal 200 quickly transmits transaction information regarding the transaction to the electronic receipt server 100. Accordingly, the granting of the reward is notified shortly after the transaction is established, and thus it is possible to further strongly impress the user with the sense of reality of the granting of the reward.

The electronic receipt server 100 grants a reward to a user and quickly notifies a user that the reward is granted when the cooperation setting of another member code with regard to the receipt member code is performed at the time of establishing the transaction. Accordingly, it is possible to strongly impress a user with the sense that the reward was granted in connection with the recent transaction.

In the granting of the reward, as a typical example, an authority to use a coupon available for a new transaction in a facility in which a transaction is performed is given to a user. By quickly notifying the user that the authority to use the coupon can be obtained according to the recent transaction, it is possible to improve an effect of the coupon for prompting the user to use the facility again. Further, by notifying the user of a part of the transaction information, it is possible to more strongly impress the user with a relation between a transaction and coupon acquisition. Thus, it is possible to cause even a user who does not know the foregoing notification to recognize the relation between a transaction and coupon acquisition immediately after the transaction is established. Any reward such as giving an authority to use another type of any coupon or adding points may be used.

The embodiment can be modified in various forms as follows.

In the electronic receipt server 100, at least part of various kinds of data stored in the main memory 2 or the auxiliary memory device 3 may be stored in a memory device installed external to the electronic receipt server 100. In the POS terminal 200, at least part of various kinds of data stored in the main memory 12 or the auxiliary memory device 13 may be stored in a memory device installed external to the POS terminal 200.

As a transaction registration apparatus, for example, an electronic cash register may be used other than the POS terminal.

For example, when an operation of declaring registration completion is performed by an operator, a transaction may be established at a time other than payment completion.

Part of the above-described information processing performed by the processor 1 or 11 may be omitted. For example, the granting of the reward according to the cooperation registration may not be performed. That is, the processor 1 may omit Act24 and Act25 in FIG. 5. The cooperation with the member code other than the receipt member code may not be performed. That is, when the processor 11 omits Act4 to Act8, Act14, and Act16 in FIG. 4 and determines Yes in Act12, the process may proceed to Act15 and the processor 1 may omit Act22 to Act25 in FIG. 5.

Some or all of the functions realized by the processor 1 or 11 through the information processing can also be realized by hardware performing the information processing which is not based on a program, such as a logic circuit. The foregoing functions can also be realized by combining software control with hardware such as the foregoing logic circuit.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A server for a sales transaction support system comprising a register device, the server comprising:
a first communication interface,
a storage device storing: a plurality of member records each including a member code and a corresponding notification destination, and reward data indicating a reward content and a reward condition, and
a server processor; wherein
the server processor is configured by a server program to:
receive transaction data including the member code from the register device via the first communication interface,
determine whether the reward condition is satisfied based on the transaction data, and
if the reward condition is satisfied based on the transaction data, transmit, via the first communication interface, a notification of the reward content to the notification destination corresponding to the member code included in the received transaction data.

2. The server according to claim 1, wherein the notification is transmitted as a push notification.

3. The server according to claim 1, wherein the notification is transmitted as an email.

4. The server according to any one of claims 1 to 3, wherein the server processor is further configured by the server program to determine whether the reward condition is satisfied based further on previous transaction data stored in association with the member code included with the transaction data.

5. The server according to any one of claims 1 to 4, wherein the notification includes at least one of a date of a registration operation performed by the register device and a store at which the registration operation was performed.

6. The server according to claim 5, wherein the reward content can be used for a discount purchase at the store.

7. A sales transaction support system comprising:
a server according to any one of claims 1 to 6; and
a register device including:
a second communication interface,
an input device, and
a register processor configured by a register program to:
perform a registration operation and generate corresponding transaction data;
receive an input of a user code via the input device,
determine whether the user code corresponds to one of the member codes,
if the user code corresponds to one of the member codes, add the member code to the transaction data and transmit the transaction data including the member code to the server via the second communication interface, wherein
the server processor is configured by a server program to:
receive the transaction data including the member code from the register device via the first communication interface,
determine whether the reward condition is satisfied based on the transaction data, and
if the reward condition is satisfied based on the transaction data, transmit, via the first communication interface, a notification of the reward content to the notification destination corresponding to the member code included in the received transaction data.

8. The system according to claim 7, wherein:
the plurality of member records each include a flag indicating whether a second member code is stored in association with the corresponding member code,
the register processor is further configured by the register program to:
if the user code does not correspond to one of the member codes, determine whether the user code corresponds to one of the second member codes,
if the user code corresponds to one of the second member codes, add the second member code to the transaction data and transmit the transaction data including the second member code to the server via the second communication interface.

9. The system according to claim 8, wherein:
the register processor is further configured by the register program to:
if the user code does not correspond to one of the member codes or one of the second member codes, receive an input via the input device indicating whether to add the user to one of the member records,
if the input indicates to add the user to one of the member records, receive an input of a second user code corresponding to one of the member codes, and
add the member code and the second user code to the transaction data to be transmitted to the server.

10. The system according to claim 9, wherein if the input indicates to add the user to one of the member records, the register processor is further configured by the register program to add cooperation data to the transaction data to be transmitted to the server, the cooperation data instructing the server to store the second user code as the second member code in association with the member code included with the transaction data.

11. The system according to claim 10, wherein, when the transaction data including the cooperation data is received via the first communication interface, the server processor is further configured by the server program to control the storage device to store the second user code as the second member code in association with the member code included with the transaction data and to set the corresponding cooperation flag.

12. A method of operating a sales transaction support system that includes a server and a register device, the method comprising:
storing, in the server, a plurality of member records each including a member code and a corresponding notification destination, and reward data indicating a reward content and a reward condition;
performing, in the register device, a registration operation and generate corresponding transaction data;
receiving an input of a user code;
determining whether the user code corresponds to one of the member codes;
if the user code corresponds to one of the member codes, adding the member code to the transaction data;
communicating the transaction data including the member code from the register device to the server;
determining whether the reward condition is satisfied based on the transaction data; and
if the reward condition is satisfied based on the transaction data, transmitting, from the server to the notification destination corresponding to the member code included in the received transaction data, a notification of the reward content.

13. The method according to claim 12, wherein:
the plurality of member records each include a flag indicating whether a second member code is stored in association with the corresponding member code, the method further comprising:
if the user code does not correspond to one of the member codes, determining whether the user code corresponds to one of the second member codes;
if the user code corresponds to one of the second member codes, adding the second member code to the transaction data; and
transmitting the transaction data including the second member code to the server via the second communication interface.

14. The method according to claim 13, further comprising:
if the user code does not correspond to one of the member codes or one of the second member codes, receiving an input indicating whether to add the user to one of the member records;
if the input indicates to add the user to one of the member records, receiving an input of a second user code corresponding to one of the member codes; and
adding the member code and the second user code to the transaction data to be communicated from the register device to the server.

15. A non-transitory computer readable medium storing a program causing a computer to execute the method according to any one of claims 12 to 14.
